# EUROPEAN PATENT APPLICATION

(11) **EP 2 582 025 A2**
(43) Date of publication of application: **17.04.2013**
(21) Application number: 12188033.0
(22) Date of filing: 10.10.2012
(51) Int. Cl.: H02K 13/10

(54) **Brush system for brush motor**

(30) Priority: 11.10.2011 US 201161545753 P
(71) Applicant: Steering Solutions IP Holding Corporation, Saginaw, MI 48601 (US)
(72) Inventor: Ozsoylu, Suat A., Rochester Hills, Michigan 48306 (US); Glumm, William, Bay City, Michigan 48706 (US)
(74) Representative: Manitz, Finsterwald & Partner GbR

(57) **Abstract**

A brush system for a brush motor design for an electric power steering system is provided. The brush motor includes a commutator rotatable about an axis, a brush guide positioned about the commutator, at least one brush disposed in the brush guide and positioned proximate to a radially outer edge of the commutator and a spring supported by the brush guide urging the at least one brush into contact with the commutator. The at least one brush includes a contact end having at least one flat portion configured to contact the commutator.

## Description

### CROSS-REFERENCES TO RELATED APPLICATIONS

This patent application claims priority to US Provisional Patent Application Serial No. 61/545,753 filed October 11, 2011, which is incorporated herein by reference in its entirety.

### BACKGROUND

The description relates to a brush motor, and in particular, a brush system for a brush motor.

In a typical brush motor, a commutator may rotate in in two directions, for example, a clockwise direction and a counter clockwise direction. Brushes of the brush motor may be held in a brush guide and positioned radially to the commutator. The brushes are spaced along an outer circumference of commutator and are configured to contact the commutator. The brushes may be urged into contact with the commutator with springs.

The brush motor uses the brushes to allow current to flow through dedicated windings that are wrapped on the commutator. These windings create an electric field that will create a torque in the magnetic field maintained through permanent magnets. The electric field is switched as the commutator turns to maintain a useful torque. Due to the switching, or commutation, the torque may have some variation. This variation may be tolerable when the commutation is done appropriately. The variations may be deterministic when the motor is running at high speeds. However, when the speeds are reduced to, for example, less than 10 rpm, additional unwanted torque variations become apparent.

The variations of torque may arise from a change or changes in contact conditions between brushes and commutator during rotation. The contact conditions may change due to the position of commutator rails with respect to each brush (due to rotation) and due to the orientation of the brush within the brush guide. The springs urging the brushes into contact with the commutator have been used in an effort to improve contact conditions. However, the use of such springs is limited by an amount of force that may be applied to the brushes without resulting in excess friction between brushes and commutator.

Accordingly, it is desirable to provide a brush motor assembly with stable contact conditions.

### SUMMARY

According to one aspect, there is provided a brush motor for an electric power steering system, the brush motor including a commutator rotatable about an axis, a brush guide positioned about the commutator, at least one brush disposed in the brush guide and positioned proximate to a radially outer edge of the commutator, and a spring supported by the brush guide urging the at least one brush into contact with the commutator. The at least one brush includes a contact end having at least one flat portion configured to contact the commutator.

These and other advantages and features will become more apparent from the following description taken in conjunction with the drawings.

### BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:

FIG. 1 shows a brush motor including brushes in a brush guide and a commutator according to an exemplary embodiment;

FIG. 2 shows elements of a brush system in a brush motor according to an exemplary embodiment;

FIG. 3 shows the contact between an individual brush and commutator according to an exemplary embodiment;

FIG. 4 shows the elements of a brush system and contact between a brush and the commutator according to an exemplary embodiment;

FIG. 5 shows force diagrams illustrating individual forces resulting from contact between the brush and commutator based on a direction of rotation of the commutator according to an exemplary embodiment; and

FIG. 6 shows a force diagram including forces between the commutator, brush holder and spring;

### DETAILED DESCRIPTION

Referring now to the Figures, where the invention will be described with reference to specific embodiments, without limiting same, a brush motor substructure 20 includes a brush guide 30, a brush 40, a spring 50, and a commutator 60.

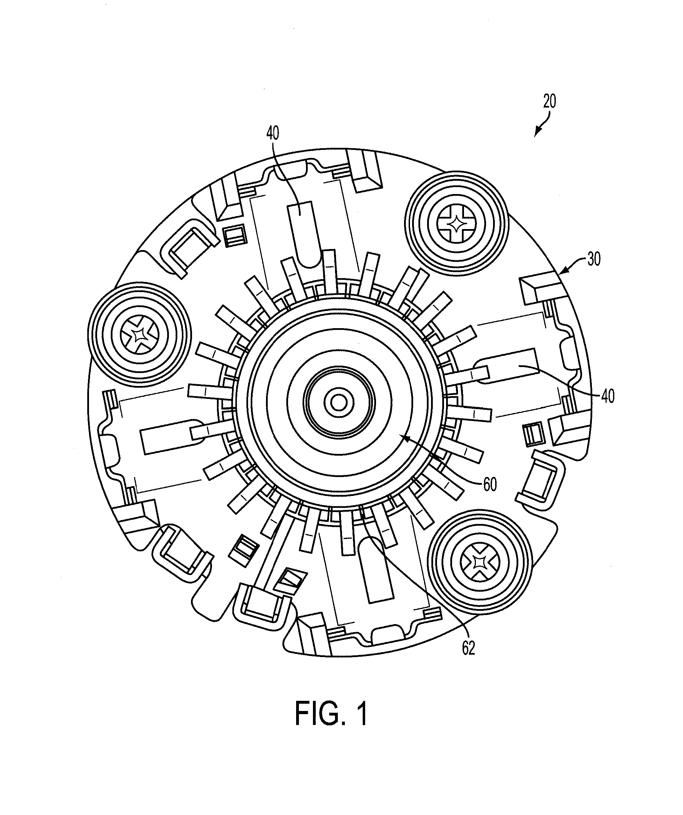

With reference to FIG. 1, in an exemplary embodiment, the commutator 60 is a rotatable in a first direction and a second direction opposite to the first direction. The commutator 60 includes a plurality of commutator leads 62 positioned along its outer circumference. The brush guide 30 is disposed radially about the commutator 60. The brush guide is configured to position the brush 40 relative to the commutator.

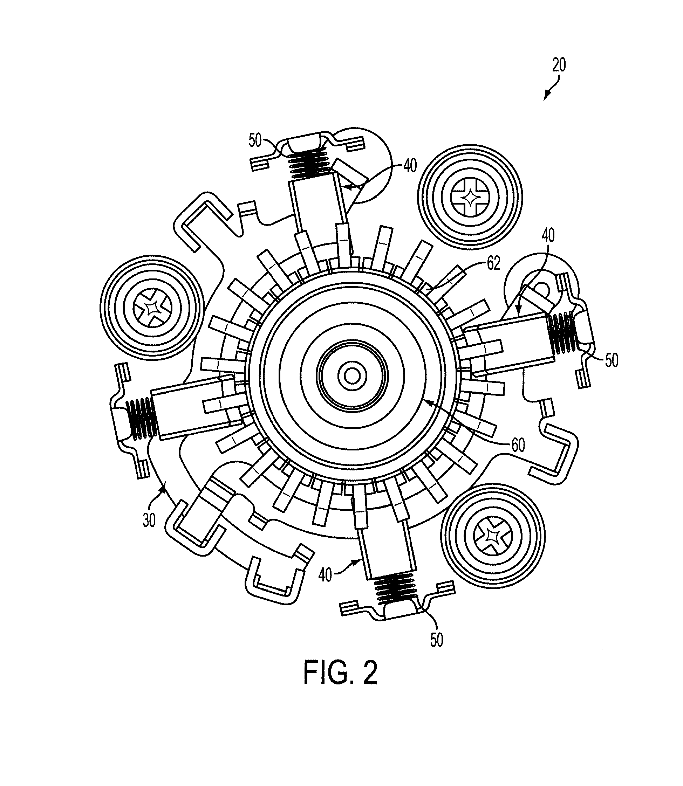

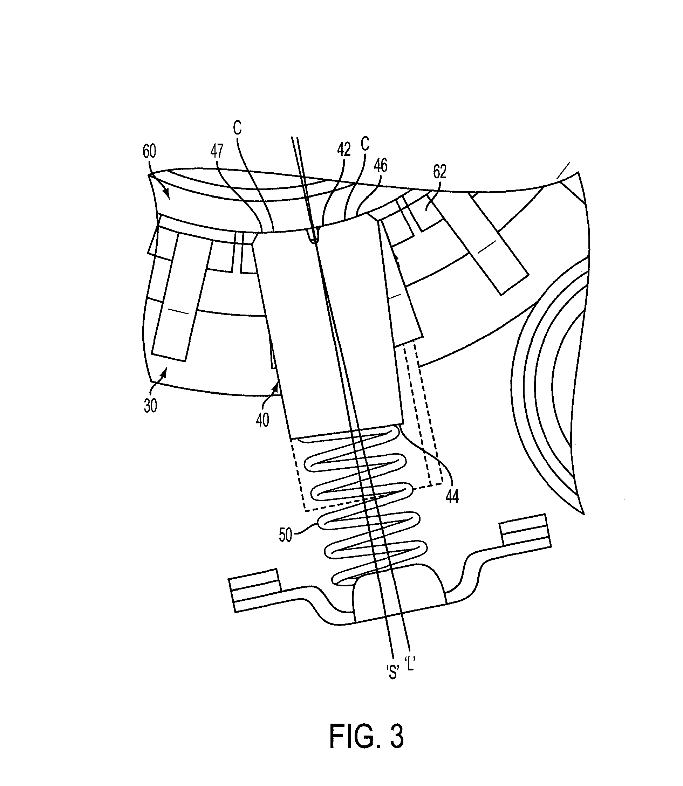

Referring to FIGS. 2 and 3, in an exemplary embodiment, the brush 40 is includes a contact end 42 and a mounting end 44. The brush 40 is positioned along a radially outer edge of the commutator 60 such that the contact end 42 is in contact with the commutator 60. The mounting end 44 of the brush 40 is formed at an opposite end of the brush 40 than the contact end 42. The mounting end 44 is installed in the brush guide 30 so that the brush guide 30 may hold the brush 40 relative to the commutator 60.

The spring 50 is supported by the brush guide 30. The spring 50 is configured to apply a spring force to the mounting end 44 of the brush 40 to urge the brush 40 into contact with the commutator 60.

In an exemplary embodiment, four brushes 40 may positioned incorporated in the brush motor substructure 20. The four brushes 40 are positioned along a radially outer portion of the commutator 60 and spaced about an outer circumference of the commutator 60. A spring 50 is included to provide the spring force to the respective brushes 40. That is, each brush 40 may be urged toward the commutator 60 by a separate spring 50. It is understood that the invention is not limited to the configuration above, and the brush motor substructure 20 may include any number of brushes 40 and springs 50 depending on the particular application.

In an exemplary embodiment, the brush motor substructure may be used in a steering system. However, a steering system implementation creates additional characteristics in brush motor designs that were not observed in traditional brush motor applications. One such characteristic is the stability of the brush 40 contact with the commutator 60. The term stability, as used herein, refers to a maintainable contact pattern that can be achieved regardless of the turning direction of the commutator. If this stability is not maintained there may be incremental torque variations at certain locations that may be amplified. The invention, according to the exemplary embodiments described herein, may stabilize the contact between the brush 40 and the commutator 60, as well as the brushes and the respective pockets where the brushes operate.

In use, the brush 40 should contact the commutator leads 62 in a synchronous manner while the commutator 60 is rotating. The resistance produced at a contact 'C' between the brush 40 and the commutator 60 results from a stable contact pattern regardless of the direction of rotation of the commutator 60. The terminology "stable contact" refers to a stable contact area as well as a reasonable amount of stable pressure at the contact 'C'. This allows for less contact resistance variation.

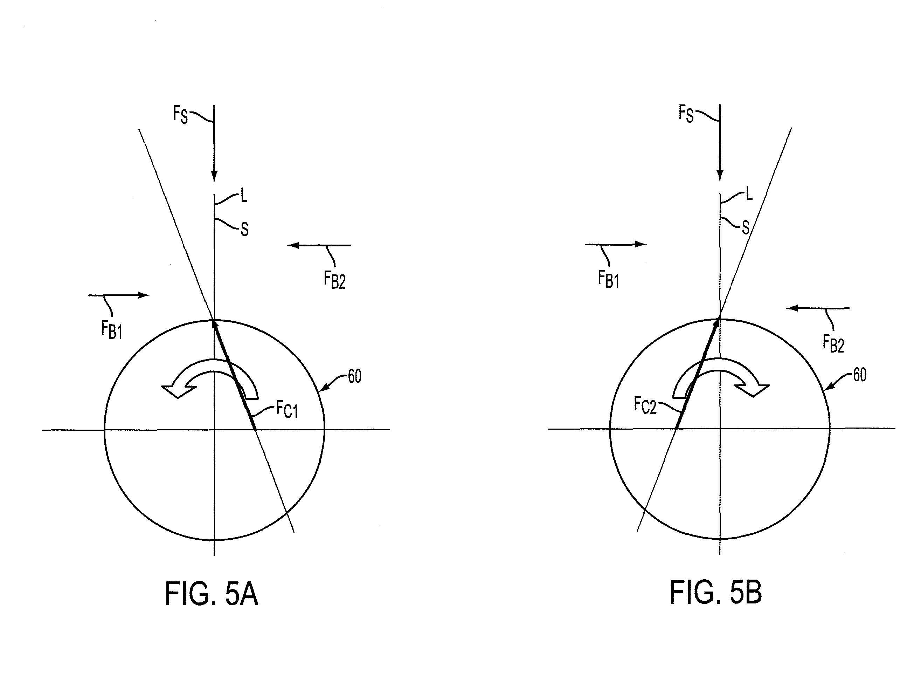

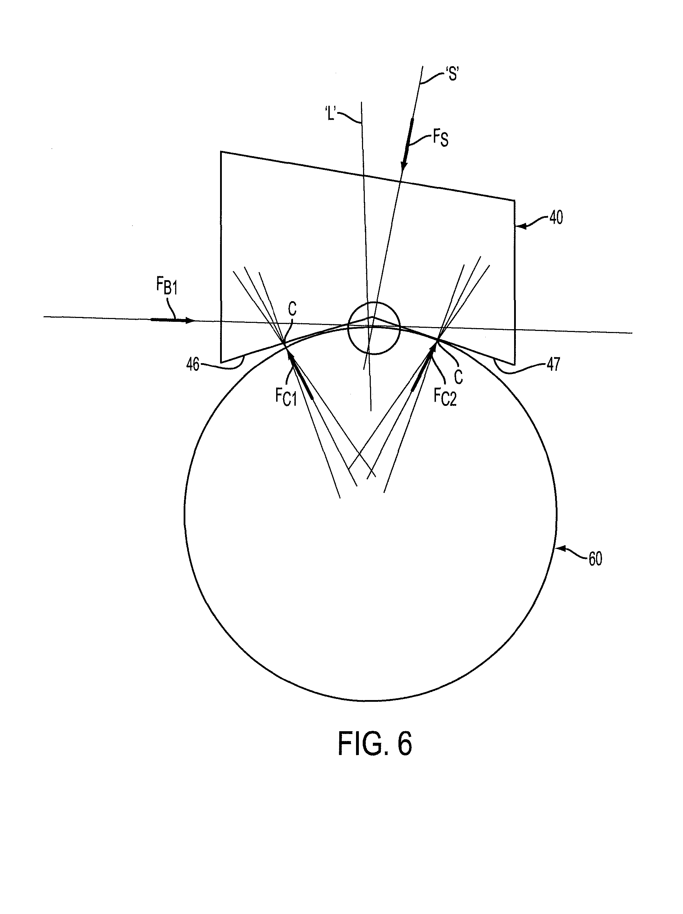

FIG. 3 illustrates the contact 'C' between the brush 40 and commutator 60 according to an exemplary embodiment of the present invention. The spring 50 presses against the mounting end 44 of the brush 40 thereby providing the spring force to urge the brush 40 into contact with the commutator 60. In accordance with an exemplary embodiment of the present invention, the contact end 42 of the brush 40 includes two flat portions 46, 47, each flat portion configured to contact the commutator 60 at a contact 'C'. The spring 50 provides a spring force F_{S} to urge the brush 12 into contact with the commutator 15 (see FIGS. 5A, 5B and 6).

In addition, with reference to FIG. 3, the brush 40 includes a longitudinal axis 'L'. The spring 50 includes a spring axis 'S'. In an exemplary embodiment, the spring axis may angled relative to the longitudinal axis such that the spring force F_{S} is applied non-axially to the brush 40.

The flat portions 46, 47 are angled relative to one another. Accordingly, in an exemplary embodiment, the contact end 42 may be formed in a substantially 'V' shape. With this geometry, the contact 'C' between the commutator 60 and the brush 40 may be moved toward outer edges, i.e., away from a center area, on the brush 40 such that there are two contacts 'C' on opposite side of the longitudinal axis 'L'. Such a configuration may allow for robustness when a force direction applied to the brush 40 varies due to a direction and velocity of rotation of the commutator, as discussed further below.

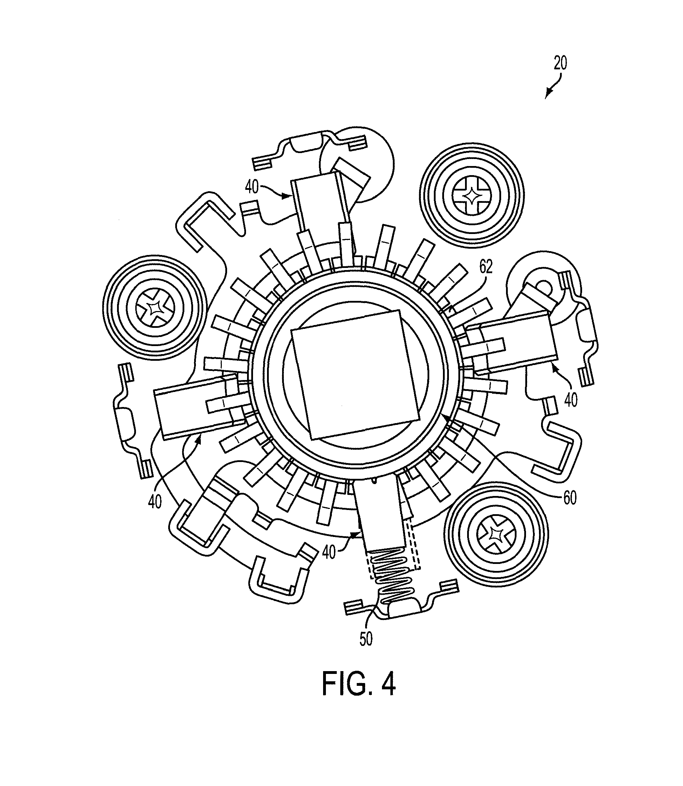

FIG. 4 is a view of the brush motor substructure in accordance with an exemplary embodiment of the present invention. In the exemplary embodiment shown in FIG. 4, the brush motor substructure 20 includes four bushes 40 positioned along a radially outer portion of the commutator 60 and spaced circumferentially around the outer circumference of the commutator 60. One of the brushes 40 is shown as a partial section view, with the commutator leads 62 cut away to show the contacts 'C' between the brush 40 and the commentator 60, similar to the view shown in FIG. 3.

FIG. 5A and 5B are diagrams illustrating a change in force vectors equilibrium due to the brush 40 interfacing with its environment and with respect to rotation direction of the commutator 60. The force vectors shown in FIGS. 5A and 5B include, among other things, force vectors on applied to the brush 40 from the commutator 60 during different directions of rotation.

FIG. 5A illustrates an example where the commutator 60 rotates in a counterclockwise direction. In this example, the spring force F_{S} is applied to the brush 40, and brush guide forces are shown as generally lateral forces F_{B1} and F_{B2}. A first commutator force F_{C1} is applied from the commutator 60 to the brush 40.

FIG. 5B illustrates an example where the commutator 60 rotates in a clockwise direction. Similar to the example in FIG. 5A, FIG. 5B shows a spring force F_{S} and brush guide forces F_{B1} and F_{B2} applied to the brush 40. However, a second commutator force F_{C2} applied by the commutator 60 is applied in a different direction than F_{C1} due to the direction of rotation of the commutator 60.

In the examples shown in FIGS. 5A and 5B, the spring force F_{S} is shown as a generally radial force relative to the commutator 60. In an exemplary embodiment, and with reference to FIG. 6 as further discussed below, it may be advantageous to offset and reorient the spring force F_{S} so that the spring force F_{S} is angled relative to a longitudinal axis of the brush 40.

Referring to FIG. 6, according to an exemplary embodiment of the present invention, to achieve a stable contact pattern, the contact 'C' between the brush 40 and commutator 60 is established as a primary contact. Later the forces are arranged such that this contact remains unchanged in terms of geometry and pressure. Contact between the brush 40 and commutator 60 may be established at two points 'C'. As detailed above, in an exemplary embodiment, the contact end 42 of the brush 40 is formed by two flat portions 46, 47. In one example, the two flat portions 46, 47 are arranged at a particular angle relative to the longitudinal axis 'L' of the brush 40. The angles of the flat portions are arranged such that the contact 'C' occurs toward the outer edges of the brush 40.

In addition, with further reference to FIG. 6, and as described above with reference to FIG. 3, the spring axis 'S' may be offset and reoriented such that the spring axis 'S' is angled relative to the longitudinal axis 'L'. Thus, the spring force F_{S} applied by the spring 50 is applied non-axially to the brush 40. With this configuration, a resultant force vector from the spring force F_{S} and the brush holder reaction F_{B1} and F_{B2} falls between the two commutator forces F_{C1} and F_{C2} created at an interface or interfaces, i.e., the contacts 'C', of the brush 40 and commutator 60. This may be achieved through offsetting and reorienting the spring vector as described above, as well as arranging a contact location between the brush 40 and the brush guide 30.

In the exemplary embodiment described above, preload applied by the spring 50 may be reduced while allowing a voltage drop across the brush-commutator interface. Thus a performance advantage compared to previous configurations may be realized. The stable brush contact also helps reduce possible noise generation resulting from variable or unstable contact between components of the brush motor substructure.

In addition, the brush motor described in the exemplary embodiment above may be used in an electric power steering system. In such an application, the commutator 60 rotates in different directions based on a direction of rotation of a steering wheel or steering shaft of a steering column.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description.

## Claims

1. A brush motor for an electric power steering system comprising:
a commutator rotatable about an axis;
a brush guide positioned about the commutator;
at least one brush disposed in the brush guide and positioned proximate to a radially outer edge of the commutator; and
a spring supported by the brush guide urging the at least one brush into contact with the commutator;
the at least one brush comprising a contact end including at least one flat portion configured to contact the commutator.

2. The brush motor of claim 1, wherein the contact surface of the brush includes two flat portions disposed on opposite sides of a longitudinal axis of the brush, each flat portion configured to contact the commutator.

3. The brush motor of claim 1, wherein the at least one brush includes a plurality of brushes disposed along a radially outer edge of the commutator and spaced along a circumference of the commutator.

4. The brush motor of claim 1, wherein the brush includes a longitudinal axis and the spring defines a spring axis, the spring axis positioned at an angle relative to the longitudinal axis of the brush.

5. The brush motor of claim 4, wherein the spring applies a spring force to the brush at an angle relative to the longitudinal axis of the brush.

6. The brush motor of claim 1, wherein the commutator further comprises commutator leads.

7. The brush motor of claim 1, wherein the commutator is rotatable in a first direction and a second direction opposite to the first direction.
